# EUROPÄISCHE PATENTSCHRIFT

(11) **EP 3 110 593 B1**
(45) Veröffentlichungstag und Bekanntmachung des Hinweises auf die Patenterteilung: **03.04.2019**
(21) Anmeldenummer: 15709117.4
(22) Anmeldetag: 23.02.2015
(51) Int. Cl.: B23K 26/14

(54) **LASERBEARBEITUNGSKOPF UND VERFAHREN ZUM LASERBEARBEITEN MIT EINER WERKSTÜCKNAHEN CROSSJETDÜSE**
LASER MACHINING HEAD AND LASER MACHINING PROCESS WITH A CROSS JET POSITIONED CLOSED TO THE WORKPIECE SURFACE
TÊTE DE TRAVAIL AU LASER ET PROCÉDÉ DE TRAVAIL AU LASER AVEC CROSSJET À PROXIMITÉ DES PIÈCES

(30) Priorität: 27.02.2014 DE 102014203576
(43) Veröffentlichungstag der Anmeldung: 04.01.2017
(73) Patentinhaber: Trumpf Laser- und Systemtechnik GmbH, 71254 Ditzingen (DE)
(72) Erfinder: BROGHAMMER, Gerhard, 78662 Boesingen (DE); MEYER, Jeremy, 71229 Leonberg (DE); ROMINGER, Volker, 71711 Steinheim an der Murr (DE)
(74) Vertreter: Kohler Schmid Möbus Patentanwälte
(86) Internationale Anmeldenummer: PCT/EP2015/053744
(87) Internationale Veröffentlichungsnummer: WO 2015/128293

(56) Entgegenhaltungen:
- EP-A1- 0 618 037
- DE-A1- 4 433 675
- JP-A- S62 187 591
- JP-A- 2000 263 276
- US-A- 5 981 901

## Beschreibung

Die vorliegende Erfindung betrifft einen Laserbearbeitungskopf mit einer Fokussieroptik zur Fokussierung eines Laserstrahls in Richtung auf eine Bearbeitungszone eines Werkstücks und mit einer Crossjetdüse zur Erzeugung einer Querströmung, die den fokussierten Laserstrahl quer, insbesondere rechtwinklig, zur Strahlachse des fokussierten Laserstrahls durchdringt, wobei der Abstand der Crossjetdüse zum Werkstück weniger als 20 mm, insbesondere zwischen 8 mm und 12 mm, beträgt, sowie auch ein Verfahren zum Laserbearbeiten eines Werkstücks, wobei ein Laserstrahl in Richtung auf eine Bearbeitungszone eines Werkstücks fokussiert wird und eine aus einer Crossjetdüse austretende Querströmung den fokussierten Laserstrahl quer zur Strahlachse durchdringt, wobei während der Bearbeitung des Werkstücks der Abstand der Crossjetdüse zum Werkstück weniger als 20 mm, insbesondere zwischen 8 mm und 12 mm, beträgt.

Ein derartiger Laserbearbeitungskopf und ein derartiges Laserbearbeitungsverfahren sind beispielsweise aus der US 5 981 901 A bekannt geworden.

Beim Laserschweißen von Werkstücken bildet sich in der Bearbeitungszone des Werkstücks eine so genannte Kapillare aus, in der das zu bearbeitende Werkstück lokal aufgeschmolzen wird. Aus der Kapillare bzw. einem die Kapillare umgebenden Schmelzbad tritt aufgrund der durch den Laserstrahl kontinuierlich hohen Energieeinkopplung Metalldampf aus, der in Form von kleinen Partikeln in einem die Bearbeitungszone umgebenden Werkstückbereich aufsteigt. Ein Teil der von dem Laserbearbeitungskopf auf das Werkstück fokussierten Laserstrahlung wird von den Metalldampf-Partikeln absorbiert, die sich dadurch erhitzen und aufgrund ihrer sehr hohen Temperatur Wärmestrahlung aussenden, d.h. es kommt zur Ausbildung einer so genannten Metalldampffackel.

Die räumliche Gestalt bzw. die Ausdehnung der Metalldampffackel während der Bearbeitung kann zeitlich und örtlich stark variieren. Entsprechend ändert sich im Umgebungsmedium die Temperatur und damit einhergehend der Brechungsindex zeitlich und örtlich ebenfalls stark, so dass sich eine so genannte thermische Linse ausbildet, die eine Ablenkung der Laserstrahlung mit hoher zeitlicher Dynamik bewirkt. Die dadurch bewirkte zeitlich und örtlich inhomogene Energieeinkopplung in das Werkstück hat einen negativen Einfluss auf die Qualität der Werkstückbearbeitung und führt beim Laserschweißen zu Schweißspritzer, Schweißnahtschwankungen in Form von unregelmäßigen Nahtoberraupen bzw. allgemein zu einer verschlechterte Schweißnahtgeometrie.

Die Ausbildung einer Metalldampffackel (aber auch die Ausbreitung von Schweißgasen, Schmauch etc.) ist ferner mit dem Problem behaftet, dass der aufsteigende Metalldampf bzw. die in den aufsteigenden Schweißgasen enthaltenen Partikel sich zunehmend an der Fokussieroptik des Laserbearbeitungskopfes absetzen und deren Funktionsweise beeinträchtigen, z.B. durch eine thermisch induzierte Fokuslagenverschiebung. Besonders ausgeprägt ist diese Gefahr durch während der Laserbearbeitung auftretende Metallspritzer, die unkontrolliert aus dem Schmelzbad in Richtung der Fokussieroptik geschleudert werden und sich in die Fokussieroptik einbrennen.

Um ein verbessertes Prozessergebnis, wie z.B. eine verbesserte Nahtqualität, zu erhalten, ist es aus der DE 20 2004 017 854 U1 bekannt, die Wechselwirkung der Laserstrahlung mit der Metalldampffackel zu reduzieren. Dies wird dadurch erreicht, dass ein unterhalb einer Bearbeitungsoptik liegender Bereich des fokussierten Laserstrahls durch mindestens einen Gasstrom weitestgehend frei von einem Gemisch aus Schweißgasen und warmer Umgebungsluft gehalten wird, indem der Gasstrom auf den fokussierten Laserstrahl gerichtet wird und den Laserstrahl durchdringt. Der Gasstrom wird mittels einer oder mehrerer Gasdüsen erzeugt und schräg auf die Bearbeitungszone oder schräg auf einen Bereich vor der Bearbeitungszone am Werkstück gerichtet. Um die Fokussieroptik vor Metallspritzern zu schützen, wird außerdem mittels einer optiknahen Crossjetdüse ein Querluftstrom ("Crossjet") erzeugt, der den fokussierten Laserstrahl quer zur Strahlachse des fokussierten Laserstrahls durchdringt und Metallspritzer ablenkt, bevor sie die Fokussieroptik erreichen.

Aus der eingangs genannten US 5 981 901 A ist ein auf das Werkstück aufsetzbares Crossjetgehäuse mit mehreren Crossjetdüsen bekannt, die jeweils übereinander, also mit unterschiedlichen Abständen zum Werkstück, angeordnet sind.

Aus JP 2000 263276 A, DE 44 33 675 A1 und EP 0 618 037 A1 ist es weiterhin bekannt, ein Schutzgas seitlich neben dem fokussierten Laserstrahl unterhalb einer Crossjetdüse auszublasen.

Es ist demgegenüber die Aufgabe der Erfindung, bei einem Laserbearbeitungskopf der eingangs genannten Art die Wechselwirkung der Laserstrahlung mit der Metalldampffackel auf einen Bereich möglichst nahe über dem Werkstück zu reduzieren.

Diese Aufgabe wird erfindungsgemäß dadurch gelöst, dass seitlich neben dem fokussierten Laserstrahl ein Düsenkörper mit einer zum Werkstück hin offenen Bodenöffnung vorgesehen ist, aus der ein Schutzgas ausströmt, und dass die Bodenöffnung unterhalb der Crossjetdüse angeordnet ist, um das zwischen dem Düsenkörper und dem Werkstück befindliche Schutzgas durch die Querströmung der Crossjetdüse in Querrichtung mindestens so weit mitzunehmen, dass es über die Bearbeitungszone strömt.

Erfindungsgemäß ist die beim Laserschweißen auftretende Metalldampffackel durch den werkstücknahen Crossjet auf eine minimale Höhe reduziert, wodurch - im Vergleich zu den bekannten werkstückfernen Standard-Crossjets - eine verbesserte Nahtqualität, eine geringere Spritzerbildung, eine größere Einschweißtiefe, geringere Einschweißtiefenschwankungen, größere Prozessfenster, ein verbesserter Schutz der Fokussieroptik vor Schweißspritzern, ein wesentlich geringerer Druckluftverbrauch (ca. 40 l/min gegenüber ca. 200 l/min bei den Standard-Crossjets) aufgrund des werkstücknah geringeren erforderlichen Strömungsbandes erreicht werden.

Zusätzlich ist oft auch eine Schutzgasabdeckung der Schweißnaht erforderlich. Der Luftzug des werkstücknahen Crossjets wird genutzt, um Schutzgas in Querrichtung ganz nahe an die Schweißstelle zu bringen. Somit sind die gewünschte Oxidfreiheit der Schmelze und ein optimaler Optikschutz vor Schmauch und Schweißspritzer effektiv möglich.

Bevorzugt ist stromaufwärts der Bodenöffnung eine Einrichtung, wie z.B. ein feinmaschiges Metalldrahtgewebe, vorgesehen, die das Schutzgas laminar auf die ausgebildete Schweißnaht strömen lässt. Die Bodenöffnung kann beispielsweise durch ein Rohrende eines Rohrabschnittes gebildet sein, der an seinem anderen Rohrende, insbesondere über eine Drossel, an eine Schutzgaszufuhr angeschlossen ist. Bevorzugt ist die Achse des einen Rohrendes des Rohrabschnittes schräg nach unten in Richtung auf den fokussierten Laserstrahl ausgerichtet, so dass das Schutzgas aus der Bodenöffnung schräg nach unten mit einer Strömungskomponente in Richtung der Querströmung ausströmt.

Besonders bevorzugt weist der Düsenkörper eine zum Werkstück hin offene, zweite Bodenöffnung auf, die sich auf der dem fokussierten Laserstrahl abgewandten Seite, d.h. entgegengesetzt der Schweißrichtung des Laserbearbeitungskopfes, an die erste Bodenöffnung anschließt und aus der das Schutzgas ebenfalls ausströmt. Durch die zweite Bodenöffnung wird die Schweißnaht, wenn die erste Bodenöffnung in Schweißrichtung bereits weiterbewegt worden ist, mit dem Schutzgas nachbegast und somit länger vor Oxidation geschützt. Bevorzugt ist stromaufwärts der zweiten Bodenöffnung eine Einrichtung, wie z.B. ein feinmaschiges Metalldrahtgewebe, vorgesehen, die das Schutzgas laminar auf die ausgebildete Schweißnaht strömen lässt. Die zweite Bodenöffnung kann beispielsweise durch ein Austrittsende eines Leitungsabschnitts gebildet sein, der an seinem anderen Leitungsende, insbesondere über eine Drossel, an die Schutzgaszufuhr angeschlossen ist. Bevorzugt ist die Achse des Austrittsendes des Leitungsabschnitts parallel zur Strahlachse ausgerichtet, so dass das Schutzgas aus der zweiten Bodenöffnung nach unten parallel zur Strahlachse laminar ausströmt. Die Länge der zweiten Bodenöffnung in Querrichtung bestimmt die Nachbegasungslänge und sollte möglichst so groß, insbesondere doppelt so groß, wie die Länge der ersten Bodenöffnung sein.

Vorteilhaft ist zumindest die dem Werkstück zugewandte Unterseite des Düsenkörpers, vorzugsweise der gesamte Düsenkörper, aus Kupfer, da Kupfer eine geringe Spritzerhaftung aufweist und gut zu reinigen ist.

Besonders bevorzugt ist der Düsenkörper am Laserbearbeitungskopf höhenverstellbar gelagert, um so den Z-Abstand des Düsenkörpers zum Werkstück einstellen zu können. Weiterhin bevorzugt ist der Düsenkörper am Laserbearbeitungskopf, insbesondere über Magnete, lösbar verbunden, um unterschiedliche Düsenkörper sehr schnell gegeneinander austauschen zu können. Die lösbare Befestigung stellt gleichzeitig auch einen Kollisionsschutz dar, da bei einer Kollision des Düsenkörpers mit dem Werkstück die Verbindung des Düsenkörpers mit dem Laserbearbeitungskopf automatisch gelöst wird.

Die Crossjetdüse kann am Laserbearbeitungskopf unabhängig vom Düsenkörper befestigt oder, was bevorzugt ist, am Düsenkörper angeordnet sein. Im letzteren Fall können unterschiedliche Düsenkörper samt ihren Luft- und Schutzgaszuführungen sehr schnell gewechselt werden.

Die Erfindung betrifft in einem weiteren Aspekt auch ein Verfahren zum Laserbearbeiten eines Werkstücks, wobei ein Laserstrahl in Richtung auf eine Bearbeitungszone eines Werkstücks fokussiert wird und eine aus einer Crossjetdüse austretende Querströmung den fokussierten Laserstrahl quer, insbesondere rechtwinklig, zur Strahlachse des fokussierten Laserstrahls durchdringt, wobei während der Bearbeitung des Werkstücks der Abstand der Crossjetdüse zum Werkstück weniger als 20 mm, insbesondere zwischen 8 mm und 12 mm, beträgt und wobei erfindungsgemäß aus einer zum Werkstück hin offenen Bodenöffnung eines Düsenkörpers ein Schutzgas seitlich neben dem fokussierten Laserstrahl nach unten ausströmt, insbesondere laminar ausströmt, und das zwischen dem Düsenkörper und dem Werkstück befindliche Schutzgas von der Querströmung der Crossjetdüse in Querrichtung mindestens so weit mitgenommen wird, dass es über die Bearbeitungszone strömt.

Weitere Vorteile der Erfindung ergeben sich aus den Ansprüchen, der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen erfindungsgemäßen Laserbearbeitungskopf mit einem im Querschnitt dargestellten Düsenkörper; und
- Fig. 2: eine vergrößerte Detailansicht gemäß II in Fig. 1.

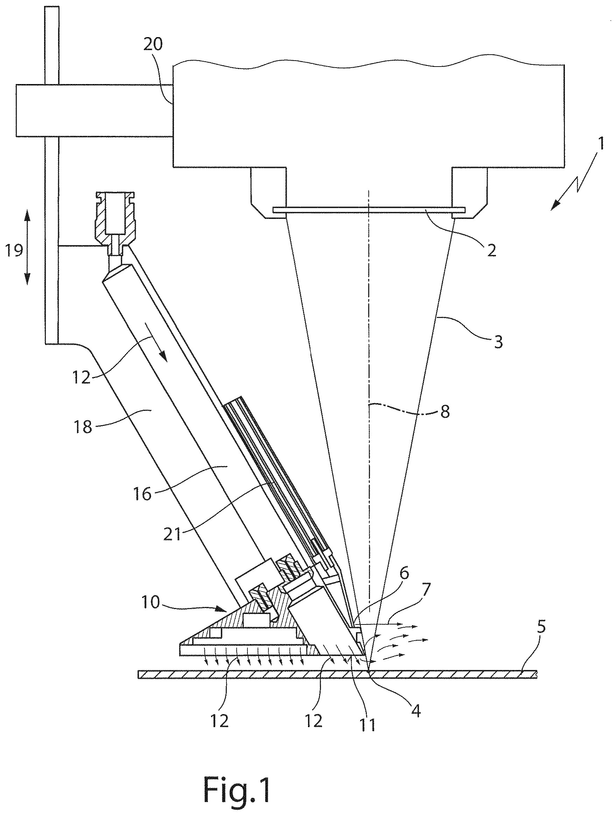

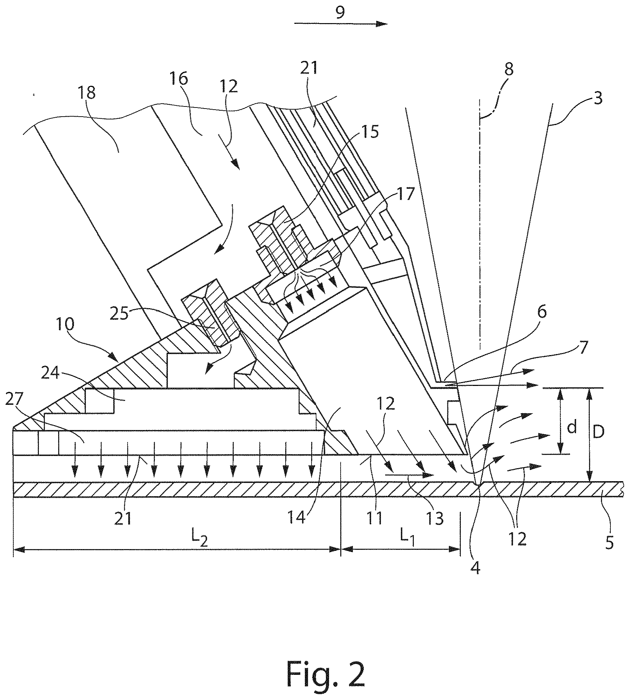

Fig. 1 zeigt einen Laserbearbeitungskopf 1 mit einer Fokussieroptik 2, die einen Laserstrahl 3 in Richtung auf eine Bearbeitungszone 4 eines Werkstücks 5 fokussiert, und mit einer Crossjetdüse 6 mit Venturi-Effekt, die eine Querluftströmung ("Cross-jet") 7 erzeugt, welche den fokussierten Laserstrahl 3 quer zur Strahlachse 8 durchdringt und die Fokussieroptik 2 vor Dämpfen und Spritzern schützt. Der Laserbearbeitungskopf 1 wird in Schweißrichtung 9 über das Werkstück 5 bewegt, wobei der in Fig. 2 gezeigte Arbeitsabstand D der Crossjetdüse 6 zum Werkstück 5 ca. 10 mm beträgt. Die Crossjetdüse 6 wird beispielsweise bei einem Austrittsquerschnitt von 0,25x7 mm² mit einem Luftstrom von ca. 35-40 l/min betrieben. Wie Versuche gezeigt haben, ist durch diese werkstücknahe Querströmung 7 die beim Laserschweißen auftretende Metalldampffackel auf eine minimale Höhe reduziert und eine optimale Schweißnaht ausgebildet.

Auf der bezüglich des fokussierten Laserstrahls 3 gleichen Seite wie die Crossjetdüse 6 weist der Laserbearbeitungskopf 1 seitlich neben dem fokussierten Laserstrahl 3 einen Düsenkörper 10 mit einer zum Werkstück 5 hin offenen, ersten Bodenöffnung 11 auf, aus der ein Schutzgas 12 nach unten ausströmt. Die erste Bodenöffnung 11 ist derart nah unterhalb der am Düsenkörper 10 befestigten Crossjetdüse 6 angeordnet, dass das zwischen dem Düsenkörper 10 und dem Werkstück 5 befindliche Schutzgas 12 durch die Querströmung 7 der Crossjetdüse 6 in Querrichtung 13 angesaugt und mindestens so weit mitgenommen wird, dass es über die Bearbeitungszone 4 strömt. Die rechtwinklig zur Strahlachse 8 bzw. parallel zur Werkstückoberseite verlaufende erste Bodenöffnung 11 weist einen rechteckigen Öffnungsquerschnitt von 10 bis 100 mm² auf und ist in einem Abstand d von beispielsweise ca. 5 mm unterhalb der Crossjetdüse 6 angeordnet.

Die erste Bodenöffnung 11 ist durch ein Rohrende eines Rohrabschnittes 14 gebildet, der an seinem anderen Rohrende über eine Drossel 15 an eine Schutzgaszufuhr 16 angeschlossen ist. Unmittelbar stromabwärts der Drossel 15 ist eine z.B. als feinmaschiges Metalldrahtgewebe ausgebildete Einrichtung 17 vorgesehen, um in dem Rohrabschnitt 14 eine laminare Schutzgasströmung zu erzeugen. Die Achse des Rohrabschnittes 14 bzw. des austrittsseitigen Rohrendes ist schräg nach unten in Richtung auf den fokussierten Laserstrahl 3 ausgerichtet, so dass das Schutzgas 12 aus der ersten Bodenöffnung 11 schräg nach unten mit einer Strömungskomponente in Richtung der Querströmung 7 laminar ausströmt.

Der Düsenkörper 10 weist optional eine zum Werkstück 5 hin offene, zweite Bodenöffnung 21 auf, die sich auf der dem fokussierten Laserstrahl 3 abgewandten Seite an die erste Bodenöffnung 11 anschließt und aus der ebenfalls das Schutzgas 12 laminar ausströmt. Die zweite Bodenöffnung 21 ist durch ein Austrittsende eines Leitungsabschnitts 24 gebildet, der an seinem anderen Leitungsende über eine Drossel 25 an die Schutzgaszufuhr 16 angeschlossen ist. Im Austrittsende des Leitungsabschnitts 24 ist eine z.B. als feinmaschiges Metalldrahtgewebe ausgebildete Einrichtung 27 vorgesehen, um eine aus der zweiten Bodenöffnung 21 laminar ausströmende Schutzgasströmung zu erzeugen. Die Achse des Austrittsendes ist parallel zur Strahlachse 8 ausgerichtet, so dass das Schutzgas 12 aus der zweiten Bodenöffnung 21 parallel zur Strahlachse 8 nach unten laminar ausströmt. Die Länge L2 der zweiten Bodenöffnung 21 ist in Schweißrichtung 9 beispielsweise etwa doppelt so lang wie die Länge L1 der ersten Bodenöffnung 11.

Für eine einfache Begasung der Schweißnaht wird ein Düsenkörper 10 mit einer einzigen Bodenöffnung 11 verwendet. Ist entgegen der Schweißrichtung 9 eine längere lineare Begasung der Schweißnaht notwendig, wird ein Düsenkörper 10 mit beiden Bodenöffnungen 11, 21 eingesetzt. Die feinmaschigen Metalldrahtgewebe sind fertige Einsätze, die sich, wenn sie durch Schweißspritzer verstopft sind, leicht und einfach austauschen lassen.

Der Düsenkörper 10 ist an einem Halter 18 befestigt, der am Laserbearbeitungskopf 1 in Richtung der Strahlachse 8 höhenverstellbar (Doppelpfeil 19) gelagert und am Laserbearbeitungskopf 1 über eine magnetische Schnittstelle 20 lösbar befestigt ist. Über die Höhenverstellung ("Z-Verstellung") lassen sich die Abstände der Crossjetdüse 6 und des Düsenkörpers 10 zum Werkstück 5 individuell einstellen. Die magnetische Schnittstelle 20 dient gleichzeitig auch als Kollisionsschutz, da bei einer Kollision des Düsenkörpers 10 mit dem Werkstück 5 die magnetische Befestigung des Düsenkörpers 10 vom Laserbearbeitungskopf gelöst wird. Innerhalb des Halters 18 verläuft die Schutzgaszufuhr 16 und außen am Halter 18 ist die Druckluftzufuhr 21 für die Crossjetdüse 6 befestigt. Der Düsenkörper 10 ist vorteilhafterweise aus Kupfer, da Kupfer eine geringe Spritzerhaftung aufweist und gut zu reinigen ist.

## Patentansprüche

1. Laserbearbeitungskopf (1) mit einer Fokussieroptik (2) zur Fokussierung eines Laserstrahls (3) in Richtung auf eine Bearbeitungszone (4) eines Werkstücks (5) und mit einer Crossjetdüse (6) zur Erzeugung einer Querströmung (7), die den fokussierten Laserstrahl (3) quer, insbesondere rechtwinklig, zur Strahlachse (8) des fokussierten Laserstrahls (3) durchdringt, und die derart ausgebildet ist, dass der Abstand (D) der Crossjetdüse (6) zum Werkstück (5) bei der Bearbeitung des Werkstücks weniger als 20 mm, insbesondere zwischen 8 mm und 12 mm, beträgt,
**dadurch gekennzeichnet,**
**dass** seitlich neben dem fokussierten Laserstrahl (3) ein Düsenkörper (10) mit einer zum Werkstück (5) hin offenen Bodenöffnung (11) vorgesehen ist, aus der ein Schutzgas (12) ausströmt, und dass die Bodenöffnung (11) unterhalb der Crossjetdüse (6) angeordnet ist, um das zwischen dem Düsenkörper (10) und dem Werkstück (5) befindliche Schutzgas (12) durch die Querströmung (7) der Crossjetdüse (6) in Querrichtung (13) mindestens so weit mitzunehmen, dass es über die Bearbeitungszone (4) strömt.

2. Laserbearbeitungskopf nach Anspruch 1, **dadurch gekennzeichnet, dass** der Abstand (d) der Bodenöffnung (11) zur Crossjetdüse (6) weniger als 10 mm, insbesondere zwischen 3 mm und 7 mm, beträgt.

3. Laserbearbeitungskopf nach Anspruch 1 oder 2, **dadurch gekennzeichnet, dass** stromaufwärts der Bodenöffnung (11) eine Einrichtung (17) zum Erzeugen einer laminaren Schutzgasströmung vorgesehen ist.

4. Laserbearbeitungskopf nach einem der Ansprüche 1 bis 3, **dadurch gekennzeichnet, dass** die Bodenöffnung (11) durch ein Rohrende eines Rohrabschnittes (14) gebildet ist, der an seinem anderen Rohrende, insbesondere über eine Drossel (15), an eine Schutzgaszufuhr (16) angeschlossen ist.

5. Laserbearbeitungskopf nach Anspruch 4, **dadurch gekennzeichnet, dass** die Achse des einen Rohrendes des Rohrabschnittes (14) schräg nach unten in Richtung auf den fokussierten Laserstrahl (3) ausgerichtet ist.

6. Laserbearbeitungskopf nach einem der Ansprüche 1 bis 5, **dadurch gekennzeichnet, dass** der Düsenkörper (10) eine zum Werkstück (5) hin offene, zweite Bodenöffnung (21) aufweist, die sich auf der dem fokussierten Laserstrahl (3) abgewandten Seite an die erste Bodenöffnung (11) anschließt und aus der ein Schutzgas (12) ausströmt.

7. Laserbearbeitungskopf nach Anspruch 6, **dadurch gekennzeichnet, dass** stromaufwärts der zweiten Bodenöffnung (21) eine Einrichtung (27) zum Erzeugen einer laminaren Schutzgasströmung vorgesehen ist.

8. Laserbearbeitungskopf nach Anspruch 6 oder 7, **dadurch gekennzeichnet, dass** die zweite Bodenöffnung (21) durch ein Austrittsende eines Leitungsabschnitts (24) gebildet ist, der an seinem anderen Leitungsende, insbesondere über eine Drossel (25), an die Schutzgaszufuhr (16) angeschlossen ist.

9. Laserbearbeitungskopf nach Anspruch 8, **dadurch gekennzeichnet, dass** die Achse des Austrittsendes des Leitungsabschnitts (24) parallel zur Strahlachse (8) ausgerichtet ist.

10. Laserbearbeitungskopf nach einem der Ansprüche 6 bis 9, **dadurch gekennzeichnet, dass** in Querrichtung (13) die Länge (L2) der zweiten Bodenöffnung (21) mindestens so groß, insbesondere mindestens doppelt so groß, wie die Länge (L1) der ersten Bodenöffnung (11) ist.

11. Laserbearbeitungskopf nach einem der Ansprüche 1 bis 10, **dadurch gekennzeichnet, dass** die Crossjetdüse (6) am Düsenkörper (10) angeordnet ist.

12. Verfahren zum Laserbearbeiten eines Werkstücks (5), wobei ein Laserstrahl (3) in Richtung auf eine Bearbeitungszone (4) eines Werkstücks (5) fokussiert wird und eine aus einer Crossjetdüse (6) austretende Querströmung (7) den fokussierten Laserstrahl (3) quer, insbesondere rechtwinklig, zur Strahlachse (8) des fokussierten Laserstrahls (3) durchdringt, wobei während der Bearbeitung des Werkstücks (5) der Abstand (D) der Crossjetdüse (6) zum Werkstück (5) weniger als 20 mm, insbesondere zwischen 8 mm und 12 mm, beträgt,
**dadurch gekennzeichnet,**
**dass** aus einer zum Werkstück (5) hin offenen Bodenöffnung (11) eines Düsenkörpers (10) ein Schutzgas (12) seitlich neben dem fokussierten Laserstrahl (3) nach unten ausströmt, insbesondere laminar ausströmt, und dass das zwischen dem Düsenkörper (10) und dem Werkstück (5) befindliche Schutzgas (12) von der Querströmung (7) der Crossjetdüse (6) in Querrichtung (13) mindestens so weit mitgenommen wird, dass es über die Bearbeitungszone (4) strömt.

13. Verfahren nach Anspruch 12, **dadurch gekennzeichnet, dass** das Schutzgas (12) aus der Bodenöffnung (11) schräg nach unten mit einer Strömungskomponente in Richtung der Querströmung (7) ausströmt.

14. Verfahren nach Anspruch 12 oder 13, **dadurch gekennzeichnet, dass** das Schutzgas (12) auch aus einer zum Werkstück (5) hin offenen, zweiten Bodenöffnung (21) des Düsenkörpers (10), die sich auf der dem fokussierten Laserstrahl (3) abgewandten Seite an die erste Bodenöffnung (11) anschließt, nach unten ausströmt, insbesondere laminar ausströmt.

15. Verfahren nach Anspruch 14, **dadurch gekennzeichnet, dass** das Schutzgas (12) aus der zweiten Bodenöffnung (21) parallel zur Strahlachse (8) nach unten ausströmt.

## Claims

1. A laser processing head (1) comprising focusing optics (2) for focusing a laser beam (3) in the direction of a processing zone (4) of a workpiece (5) and a cross-jet nozzle (6) for generating a transverse flow (7) which passes through the focused laser beam (3) transversely, in particular perpendicularly, to the beam axis (8) of the focused laser beam (3), and which is designed such that the distance (D) from the cross jet nozzle (6) to the workpiece (5) during processing of the workpiece is less than 20 mm, in particular between 8 mm and 12 mm,
**characterized in that**
a nozzle body (10) having a bottom opening (11) open toward the workpiece (5), out of which a protective gas (12) flows, is provided laterally next to the focused laser beam (3), and **in that** the bottom opening (11) is arranged below the cross-jet nozzle (6) in order to entrain the protective gas (12) located between the nozzle body (10) and the workpiece (5) by the transverse flow (7) of the cross-jet nozzle (6) in the transverse direction (13) at least to such an extent that it flows over the processing zone (4).

2. The laser processing head as claimed in claim 1, **characterized in that** the distance (d) from the bottom opening (11) to the cross-jet nozzle (6) is less than 10 mm, in particular between 3 mm and 7 mm.

3. The laser processing head as claimed in claim 1 or 2, **characterized in that** a device (17) for generating a laminar protective gas flow is provided upstream of the bottom opening (11).

4. The laser processing head as claimed in one of claims 1 to 3, **characterized in that** the bottom opening (11) is formed by one tube end of a tube section (14), which is connected at its other tube end, in particular via a throttle (15), to a protective gas feed (16).

5. The laser processing head as claimed in claim 4, **characterized in that** the axis of the one tube end of the tube section (14) is oriented obliquely in a downward direction towards the focused laser beam (3).

6. The laser processing head as claimed in one of claims 1 to 5, **characterized in that** the nozzle body (10) comprises a second bottom opening (21) open toward the workpiece (5), which follows on from the first bottom opening (11) on the side facing away from the focused laser beam (3), and out of which a protective gas (12) flows.

7. The laser processing head as claimed in claim 6, **characterized in that** a device (27) for generating a laminar protective gas flow is provided upstream of the second bottom opening (21).

8. The laser processing head as claimed in claim 6 or 7, **characterized in that** the second bottom opening (21) is formed by an outlet end of a line section (24), which is connected at its other line end, in particular via a throttle (25), to the protective gas feed (16).

9. The laser processing head as claimed in claim 8, **characterized in that** the axis of the outlet end of the line section (24) is oriented parallel to the beam axis (8).

10. The laser processing head as claimed in one of claims 6 to 9, **characterized in that**, in the transverse direction (13), the length (L2) of the second bottom opening (21) is at least as great, in particular at least two times as great, as the length (L1) of the first bottom opening (11).

11. The laser processing head as claimed in one of claims 1 to 10, **characterized in that** the cross-jet nozzle (6) is arranged on the nozzle body (10).

12. A method for the laser processing of a workpiece (5), wherein a laser beam (3) is focused in the direction of a processing zone (4) of a workpiece (5), and a transverse flow (7) emerging from a cross-jet nozzle (6) passes through the focused laser beam (3) transversely, in particular perpendicularly, to the beam axis (8) of the focused laser beam (3), wherein during the processing of the workpiece (5), the distance (D) from the cross-jet nozzle (6) to the workpiece (5) is less than 20 mm, in particular between 8 mm and 12 mm,
**characterized in that**
a protective gas (12) flows out, in particular, laminarly, laterally next to the focused laser beam (3) downward from a bottom opening (11), open toward the workpiece (5), of a nozzle body (10), and **in that** the protective gas (12) located between the nozzle body (10) and the workpiece (5) is entrained by the transverse flow (7) of the cross-jet nozzle (6) in the transverse direction (13) at least to such an extent that it flows over the processing zone (4).

13. The method as claimed in claim 12, **characterized in that** the protective gas (12) flows out of the bottom opening (11) obliquely downward with a flow component in the direction of the transverse flow (7).

14. The method as claimed in one of claims 12 or 13, **characterized in that** the protective gas (12) also flows out downward, in particular laminarly, from a second bottom opening (21), open toward the workpiece (5), of the nozzle body (10), which follows on from the first bottom opening (11) on the side facing away from the focused laser beam (3).

15. The method as claimed in claim 14, **characterized in that** the protective gas (12) flows out downward parallel to the beam axis (8) from the second bottom opening (21).

## Revendications

1. Tête d'usinage au laser (1) comportant un système optique de focalisation (2) pour focaliser un faisceau laser (3) en direction d'une zone d'usinage (4) d'une pièce (5) et une buse à jet transversal (6) pour produire un écoulement transversal (7) qui traverse le faisceau laser focalisé (3) transversalement, en particulier perpendiculairement, à l'axe de faisceau (8) du faisceau laser focalisé (3) et qui est conçue de telle sorte que la distance (D) entre la buse à jet transversal (6) et la pièce (5) lors de l'usinage de la pièce est inférieure à 20 mm, en particulier comprise entre 8 mm et 12 mm,
**caractérisée en ce**
**qu'**un corps de buse (10) avec une ouverture de fond (11) qui est ouverte vers la pièce (5) et depuis laquelle s'écoule un gaz protecteur (12) est prévu latéralement à côté du faisceau laser focalisé (3), et **en ce que** l'ouverture de fond (11) est disposée sous la buse à jet transversal (6) pour entraîner, par l'écoulement transversal (7) de la buse à jet transversal (6), le gaz protecteur (12) se trouvant entre le corps de buse (10) et la pièce (5) dans la direction transversale (13) au moins assez loin pour qu'il s'écoule sur la zone d'usinage (4).

2. Tête d'usinage au laser selon la revendication 1, **caractérisée en ce que** la distance (d) entre l'ouverture de fond (11) et la buse à jet transversal (6) est inférieure à 10 mm, en particulier comprise entre 3 mm et 7 mm.

3. Tête d'usinage au laser selon la revendication 1 ou 2, **caractérisée en ce qu'**un moyen (17) pour produire un écoulement laminaire de gaz protecteur est prévu en amont de l'ouverture de fond (11).

4. Tête d'usinage au laser selon l'une des revendications 1 à 3, **caractérisée en ce que** l'ouverture de fond (11) est formée par une extrémité de tube d'une section de tube (14) qui est reliée à son autre extrémité de tube, en particulier par l'intermédiaire d'un étranglement (15), à une alimentation en gaz protecteur (16).

5. Tête d'usinage au laser selon la revendication 4, **caractérisée en ce que** l'axe d'une extrémité de tube de la section de tube (14) est orienté obliquement vers le bas en direction du faisceau laser focalisé (3).

6. Tête d'usinage au laser selon l'une des revendications 1 à 5, **caractérisée en ce que** le corps de buse (10) présente une deuxième ouverture de fond (21) ouverte vers la pièce (5), adjacente à la première ouverture de fond (11) du côté éloigné du faisceau laser focalisé (3) et depuis laquelle s'écoule un gaz protecteur (12).

7. Tête d'usinage au laser selon la revendication 6, **caractérisée en ce qu'**un moyen (27) pour produire un écoulement laminaire de gaz protecteur est prévu en amont de la deuxième ouverture de fond (21).

8. Tête d'usinage au laser selon la revendication 6 ou 7, **caractérisée en ce que** la deuxième ouverture de fond (21) est formée par une extrémité de sortie d'une section de conduite (24) qui est reliée à son autre extrémité de conduite, en particulier par l'intermédiaire d'un étranglement (25), à l'alimentation en gaz protecteur (16).

9. Tête d'usinage au laser selon la revendication 8, **caractérisée en ce que** l'axe de l'extrémité de sortie de la section de conduite (24) est orienté parallèlement à l'axe de faisceau (8).

10. Tête d'usinage au laser selon l'une des revendications 6 à 9, **caractérisée en ce que**, dans la direction transversale (13), la longueur (L2) de la deuxième ouverture de fond (21) est au moins aussi grande, en particulier au moins deux fois plus grande, que la longueur (L1) de la première ouverture de fond (11).

11. Tête d'usinage au laser selon l'une des revendications 1 à 10, **caractérisée en ce que** la buse à jet transversal (6) est disposée sur le corps de buse (10).

12. Procédé d'usinage au laser d'une pièce (5), dans lequel un faisceau laser (3) est focalisé en direction d'une zone d'usinage (4) d'une pièce (5) et un écoulement transversal (7) sortant d'une buse à jet transversal (6) traverse le faisceau laser focalisé (3) transversalement, en particulier perpendiculairement, à l'axe de faisceau (8) du faisceau laser focalisé (3), la distance (D) entre la buse à jet transversal (6) et la pièce (5) pendant l'usinage de la pièce (5) étant inférieure à 20 mm, en particulier comprise entre 8 mm et 12 mm,
**caractérisé en ce**
**qu'**un gaz protecteur (12) s'écoule vers le bas, en particulier de manière laminaire, latéralement à côté du faisceau laser focalisé (3) depuis une ouverture de fond (11) ouverte vers la pièce (5) d'un corps de buse (10), et **en ce que** le gaz protecteur (12) se trouvant entre le corps de buse (10) et la pièce (5) est entraîné par l'écoulement transversal (7) de la buse à jet transversal (6) dans la direction transversale (13) au moins assez loin pour qu'il s'écoule sur la zone d'usinage (4).

13. Procédé selon la revendication 12, **caractérisé en ce que** le gaz protecteur (12) s'écoule obliquement vers le bas, avec une composante d'écoulement en direction de l'écoulement transversal (7), depuis l'ouverture de fond (11).

14. Procédé selon la revendication 12 ou 13, **caractérisé en ce que** le gaz protecteur (12) s'écoule vers le bas, en particulier de manière laminaire, également depuis une deuxième ouverture de fond (21) ouverte vers la pièce (5) du corps de buse (10) qui est adjacente à la première ouverture de fond (11) du côté éloigné du faisceau laser focalisé (3).

15. Procédé selon la revendication 14, **caractérisé en ce que** le gaz protecteur (12) s'écoule vers le bas parallèlement à l'axe de faisceau (8) depuis la deuxième ouverture de fond (21).
